# EUROPEAN PATENT SPECIFICATION

(11) **EP 0 779 936 B1**
(45) Date of publication and mention of the grant of the patent: **09.09.1998**
(21) Application number: 95930099.7
(22) Date of filing: 27.07.1995
(51) Int. Cl.: C22C 16/00, G21C 3/07

(54) **ZIRCONIUM ALLOY WITH TUNGSTEN AND NICKEL**
ZITKONIUMLEGIERUNG MIT WOLFRAM UND NICKEL
ALLIAGE DE ZIRCONIUM AVEC DU TUNGSTENE ET DU NICKEL

(30) Priority: 31.08.1994 US 296933
(43) Date of publication of application: 25.06.1997
(73) Proprietor: COMBUSTION ENGINEERING, INC., Windsor Connecticut 06095-0500 (US); ABB ATOM AB, 721 63 Västeras (SE); AB Sandvik Steel, 811 81 Sandviken (SE); SANDVIK SPECIAL METALS CORP., Kennewick, WA 99336 (US); Teledyne Wah Chang Albany, Albany, OR 97321 (US)
(72) Inventor: GARDE, Anand, M., Windsor, CT 06095 (US); RUDLING, Peter, S-721 63 Vasteras (SE); MIKES-LINDBACK, Mirka, S-721 63 Vasteras (SE); VANNEVIK, Hanna, S-811 81 Sandviken (SE); BRADLEY, E., Ross, Kennewick, WA 99336 (US); EUCKEN, Craig, M. Teledyne Wah Chang Albany, 1600 Old Salem Rd.N.E. Albany, OR 97321 (US)
(74) Representative: Rupprecht, Klaus, Dipl.-Ing.
(86) International application number: US9509455
(87) International publication number: WO9606956

(56) References cited:
- EP-A- 0 345 531
- FR-A- 2 576 322
- GB-A- 1 084 250

## Description

### Background of the Invention

This invention relates to alloys for use in light water nuclear reactor (LWR) core structural components and fuel cladding. More particularly, this invention relates to a zirconium alloy for such use which exhibits superior corrosion resistance, mechanical properties, and reduced hydrogen uptake after irradiation. Still more particularly, this invention relates to a zirconium alloy with tin, iron, chromium, tungsten and nickel having improved corrosion resistance and irradiated properties by controlling its alloy composition to within particular ranges.

### Description of the Prior Art

Zirconium alloys are used in the fuel assembly structural components of nuclear reactors, such as in fuel rod cladding, guide or thimble tubes, grid strips, instrument tubes, and so forth because of their low neutron cross section, good corrosion resistance against high pressure/high temperature steam and water, good mechanical strength, and fabricability. Zirconium alloys, particularly those commonly known as Zircaloy-2 and Zircaloy-4 have been used in light water reactor (LWR) cores because of their relatively small capture cross section for thermal neutrons. The addition of 0.5 to 2.0 percent by weight niobium and up to 0.25 percent of a third alloying element to these Zirconium alloys for purposes of corrosion resistance in the reactor core is suggested in U.S. Pat. No. 4,649,023 as part of a teaching of producing a microstructure of homogeneously disbursed fine precipitates of less than about 800 angstroms. The third alloying element is a constituent such as iron, chromium, molybdenum, vanadium, copper, nickel and tungsten.

Pellet-clad interaction (PCI) resistance is sought in U.S. Pat. Nos. 4,675,153 and 4,664,831 by use of zirconium-based alloys including "zirconium-2.5 w/o niobium". The latter teaching also refers to "Zr-Nb alloys containing about 1.0 to 3.0 w/o Nb". In these patents, oxygen is present "below about 350 ppm of said alloy".

U.S. Pat. No. 4,648,912 teaches improving high temperature corrosion resistance of an alpha zirconium alloy body by rapidly scanning the surface of the body with a laser beam. The alloy treated included zirconiumniobium alloys.

An improved ductile irradiated zirconium alloy is described in U.S. Pat. No. 4,879,093 issued to an inventor in this application. The alloy has a stabilized microstructure which minimizes loss of alloy ductility required to resist release of fission gases and to handle spent fuel safely. The alloy retains a reasonable corrosion resistance in both pressurized water reactors (PWRs) and boiling water reactors (BWRs) because of its optimum intermetallic precipitate average particle size. The alloy of the '093 patent is based on an alpha phase zirconium-tin-niobium or alpha phase zirconium-tin-molybdenum alloy having characteristics as shown in Table 1 of that patent with niobium, if present, in a range of from a measurable amount up to 0.6 percent by weight. The molybdenum, if present, is in a range of from a measurable amount up to 0.1 percent by weight. The zirconium-tin system is known as "Zircaloy" and, typically, if Zircaloy-4, for example, would also have 0.18 to 0.24 percent by weight iron, 0.07 to 0.13 percent by weight chromium, oxygen in the range of from 1000 to 1600 ppm, 1.2 to 1.7 percent by weight tin, and the remainder zirconium.

U.S. Pat. No. 4,992,240 discloses another zirconium alloy containing on a weight basis, 0.4 to 1.2% tin, 0.2 to 0.4% iron, 0.1 to 0.6% chromium, not higher than 0.5% of niobium, and balance zirconium, wherein the sum weight proportions of tin, iron and chromium is in the range of 0.9 to 1.5%. oxygen, according to Fig. 4 of the 1240 patent, is about 1770 ppm to 1840 ppm. Niobium is apparently optional, and silicon is not reported.

U.S. Pat. No. 3,303,025 discloses a zirconium alloy with tungsten addition of 0.25 to 1.5% with simultaneous additions of copper (0.5 to 1.5%) and niobium (0.2 to 3.0%). The quaternary alloys have superior corrosion resistance than Zircaloy-4 in short term (up to 2000 hrs) tests in high temperature steam at 500 and 700°C. However, in wet steam at 280°C, the quaternary alloy has lower corrosion resistance than Zircaloy-4.

The work at UKAEA⁽¹⁾ has shown that alpha-annealed Zr-0.3% W alloy has a significantly superior corrosion resistance than Zircaloy-2 after a 2-day corrosion test in one atmospheric pressure steam at 600°C. The 0.3% W alloy had a weight gain of 119 ± 8 mg/dM² while Zircaloy-2 had a weight gain of 439 ± 14 mg/dM² after the corrosion test.

Recent trends in the nuclear industry include shifts toward higher coolant temperatures to increase the thermal efficiency and toward higher fuel discharge burnups to increase the fuel utilization. Both the higher coolant temperatures and discharge burnups tend to increase the in-reactor corrosion and hydrogen uptake of the zirconium alloys. The high levels of neutron fluence and simultaneous hydrogen pickup degrade the ductility of zirconium alloys. For these more demanding service conditions, it is therefore necessary to improve the corrosion resistance, reduce hydrogen uptake, and improve the irradiated ductility of zirconium alloys.

Accordingly, it is a continuing problem in this art to develop a zirconium alloy having superior ductility after irradiation; good corrosion resistance, especially independent of processing history; reduced hydrogen absorption by the alloy; and a significant solid solution alloy strength.

It is another continuing general problem in this art to improve the corrosion resistance and irradiated ductility of zirconium alloys used in fuel assembly structural components in nuclear reactors. Zirconium alloy development with the above-mentioned objectives in recent years is concentrated on Zr-Sn-Nb alloys.

### Description of the Preferred Embodiments

It is an object of this invention, therefore, to provide a zirconium alloy with improved corrosion resistance.

It is an additional object of this invention to provide a zirconium alloy with an improved postirradiation mechanical properties.

It is still another object of this invention to provide a zirconium alloy with reduced hydrogen uptake.

It is yet another object of this invention to provide a zirconium alloy with a predetermined alloy composition having tungsten and nickel for improving corrosion resistance and irradiated mechanical properties.

It is yet another object of this invention to provide a zirconium alloy with a predetermined alloy composition which does not specify niobium as constituent of the alloy.

According to the invention, these objects are achieved by a zirconium alloy as defined in claim 1, and preferably as defined in the dependent claims 2 to 13.

The invention is based on ex-reactor autoclave corrosion testing of zirconium alloys at six different autoclave test conditions. Since a widely applicable and verified correlation between in-reactor corrosion resistance and autoclave corrosion weight gain data does not exist, it was decided to conduct long term autoclave corrosion testing at six different autoclave test conditions: 360°C pure water, 360° water with 70-ppm lithium addition, 360°C water with 200-ppm lithium addition, 400°C steam, 415°C steam and 520°C steam. The objective was to select an alloy that will exhibit adequate corrosion resistance at most of these (if not all) autoclave test conditions. Experimental alloys were fabricated by adding different levels of W, V, Ni to the base zirconium alloy (0.5% Sn-0.4% Fe-0.2% Cr - balance Zr). For comparison with the currently commercially used zirconium alloys in the nuclear industry, Zircaloy-2 and Zircaloy-4 test specimens were also included in the corrosion testing. Since the corrosion resistance of zirconium alloys strongly depends on the fabrication history, each alloy was fabricated using two different thermal fabrication histories. The fabrication history was designated by a cumulative annealing parameter (Σ Ai).

After the corrosion test, the specimen weight gain was measured as an indicator of the corrosion resistance of the material. The hydrogen content of the metal after the corrosion test was measured to estimate the hydrogen uptake (ΔH). Both measurements were compared to those of Zircaloy-2 and Zircaloy-4 to determine relative improvement in the corrosion resistance of new alloys compared to Zircaloy-2 and Zircaloy-4. An alloy with a composition close to the composition claimed in this disclosure showed significant improvement in corrosicn resistance compared to Zircaloy-2 and Zircaloy-4 for most of the autoclave test conditions (see Table 1). Slight degradation observed in few cases (400°C steam, 166 days condition in Table 1) is within the anticipated experimental measurement scatter.

Moreover, this alloy shows corrosion improvement for both annealing parameters, although the benefit appears to be larger at the lower annealing parameter of 10⁻¹⁹ hours.

A statistical analysis was conducted to determine the coefficients for regression equations relating the corrosion weight gain and hydrogen uptake to the different alloy composition parameters and annealing parameter. Both the effect of the individual parameter and that of the parameter interactions were evaluated. A negative coefficient with a high confidence level implies a statistically significant beneficial effect of that parameter in reducing the weight gain or hydrogen uptake. A positive coefficient implies that the presence of that parameter degrades the corrosion resistance. When the confidence level of a coefficient is less than 95%, observed effect was treated as insignificant. The results are presented in Table 2. The vanadium addition to the alloy is considered detrimental to the corrosion resistance based on the following large positive coefficients in Table 2: 400° wt gain, 415° wt gain, (W*V) interaction in hydrogen uptake in the 360°C water test with 200 ppm lithium and weight gains in 400 and 520° C steam tests; and (V*Ni) interaction in weight gains in 360°C water 200 ppm Li test and 400*c steam test. The benefit of W and Ni additions is confirmed by large negative coefficients in Table 2 in 200 ppm lithium 360°C water test weight gain, 400°C steam test and 520° steam test.

The reasons for selecting specific levels of the different alloying elements are given below, and the composition of the alloy according to the invention is shown in Table 3.

The alloy of the present invention thus includes tin (Sn) in a range of greater than 0.005 wt.% to less than 1.0 wt.%, preferably with a lower limit greater than 0.1 wt.% to an upper limit of less than 0.7 wt.%, and most preferably with a lower limit greater than 0.3 wt.% and an upper limit of less than 0.5 wt.%. The alloy also has iron (Fe) in a range of greater than 0.05 wt.% to less than 1.0 wt.%, preferably with a lower limit greater than 0.2 wt.% to an upper limit of less than 0.5 wt.%, and most preferably with a lower limit greater than 0.3 wt.% to an upper limit of less than 0.4 wt.%; chromium (Cr) in a range of greater than 0.02 wt.% to less than 1.0 wt.%, preferably with a lower limit greater than 0.05 wt.% and an upper limit of less than 0.5 wt.%, and most preferably with a lower limit greater than 0.1 wt.% to an upper limit of less than 0.2 wt.%; silicon in a range of greater than 50 to less than 300 parts per million (ppm), preferably in a range of greater than 70 ppm to about 200 ppm, and most preferably in a range greater than 90 ppm to about 150 ppm; tungsten (W) in a range of greater than 0.01 wt.% to less than 1.0 wt.%, preferably with a lower limit greater than 0.1 wt.% to an upper limit of less than 0.7 wt.%, and most preferably with a lower limit greater than 0.2 wt.% to an upper limit less than 0.5 wt.%; nickel (Ni) in a range of greater than 0.007 wt.% to less than 0.3 wt.%, preferably with a lower limit greater than 0.05 wt.% to an upper limit less than about 0.2 wt.%, and most preferably with a lower limit greater than 0.08 wt.% to an upper limit less than 0.1 wt.%, with the balance zirconium. The composition of the alloy of this invention does not specify niobium or vanadium additions.

### TIN (Sn)

A decrease in the tin level below the 1.2 percent lower limit in Zircaloy-4 improves its corrosion resistance.⁽²⁾ For this reason, the tin level for the alloy of the invention is selected to be in the range of greater than 0.005 wt.% and less than 1.0 wt.%. However, the trend of the mechanical property data regarding the influence of tin content on the thermal creep of zirconium alloys at 4000C indicates that a decrease in tin level will degrade the creep resistance of zirconium alloys.⁽³⁾ The selected range of the tin level is expected to provide a combination of good corrosion resistance and good creep resistance for the alloy of the invention and that the addition of tungsten and nickel, as well as iron, as discussed below will improve the mechanical properties of the alloy of the invention. Preferably, the lower limit of the range for tin is greater than 0.1 wt.% and the upper limit of the range for tin is less than 0.7 wt.%, and most preferably the lower limit of the range for tin is greater than 0.3 wt.% and the upper limit of the range for tin is less than 0.5 wt.%.

### IRON (Fe)

The corrosion resistance of Zircaloy-2 and zirconium-iron alloys in both 360°C water and 400°C (or higher) steam depends on the iron level.⁽⁴⁾ In order to achieve good corrosion resistance in both steam and water environments, a range of iron was selected with a range of from greater than 0.05 wt.% to 1.0 wt.%, preferably with a lower limit greater than 0.2 wt.% to an upper limit of less than 0.5 wt.%, and most preferably with a lower limit greater than 0.3 wt.% to an upper limit of less than 0.4 wt.%. The upper limit was selected because an iron level of greater than about 1.0 wt.% degrades fabricability.

### CHROMIUM (Cr)

Chromium is mainly added to improve the strength and creep resistance of the alloy of the invention. The range for chromium in this alloy is greater than 0.02 wt.% up to 1.0 wt.%, preferably with a lower limit greater than 0.05 wt.% to an upper limit of less than 0.5 wt.%, and most preferably with a lower limit greater than 0.1 wt.% to an upper limit less than 0.2 wt.%. The corrosion resistance of zirconium alloys is known to depend on the (Fe/Cr) ratio and a ratio of 2 appears to provide a good corrosion resistance to the alloy. The most preferable upper level of chromium (0.2%) is based on the most preferable upper Fe level of 0.4%. These ranges are useful in improving mechanical properties of the alloy without degradation of the corrosion resistance. Recent information⁽⁵⁾ on the corrosion resistance of Zircaloy-4 irradiated in Boiling Water Reactor to burnups greater than 30Gwd/mtu indicate the beneficial effect of Cr addition. Hydrogen uptake in autoclaved specimens⁽⁵⁾ also shows the beneficial effect of Cr addition.

### SILICON (Si)

The silicon is in a range of greater than 50 ppm to less than 300 ppm, preferably in a range of greater than 70 to 200 ppm, and most preferably in a range of greater than 90 ppm to about 150 ppm. Silicon is added as an alloying element to reduce the hydrogen absorption by the alloy and also to reduce the variation of the corrosion resistance with variations in the processing history of the alloy.⁽²⁾

### TUNGSTEN (W)

Tungsten is added in a range of greater than 0.01 wt.% up to 1.0 wt.%, preferably in a range with a lower limit greater than 0.1 wt.% to an upper limit of less than 0.7 wt.%, and most preferably in a range with a lower limit greater than 0.2 wt.% to an upper limit of less than 0.5 wt.%. The addition of tungsten in these ranges is expected to improve the corrosion resistance and mechanical properties of the alloy, and to reduce its hydrogen uptake.

### NICKEL (Ni)

Nickel is added in a range of greater than 0.007 wt.% up to 0.3 wt.%, preferably with a lower limit greater than 0.05 wt.% to an upper limit of less than 0.2 wt.%, and most preferably with a lower limit greater than 0.08 wt.% to an upper limit of less than 0.1 wt.%, to enhance the high temperature corrosion resistance of the zirconium alloy.

Unlike the compositions of recently proposed zirconium alloys containing tin and niobium for reactor use, the composition of the alloy of the invention does not specify niobium.

Thus, the invention of the new alloy described in this specification is expected to achieve good corrosion resistance, mechanical properties, and reduced hydrogen absorption by its selected composition. The exposure of zirconium alloys to a water reactor environment results in irradiation damage to the microstructure and hydride precipitation. Both of these factors reduce the ductility and corrosion resistance of the irradiated alloys. The higher levels of alloying elements generally improve the strength and creep resistance of zirconium alloys with a concurrent degradation of the corrosion resistance. A new zirconium alloy, according to this invention, with optimum levels of tin, iron, chromium, silicon, tungsten, and nickel is proposed that should provide a good combination of mechanical properties and corrosion resistance after irradiation.

### BIBLIOGRAPHY

(1) Wanklyn, J. N., Demant, J. T., and Jones, D., "The Corrosion of Zirconium and its Alloys by High Temperature Steam", AERE-R3655, Atomic Energy Research Establishment, Harwell, UK, 1961.
(2) Eucken, C. M., Finden, P. T., Trapp - Pritsching, S. and Weidinger, H. G., "Influence of Chemical Composition on Uniform Corrosion of Zirconium Base Alloys in Autoclave Tests", Zirconium in the Nuclear Industry Eighth International Symposium, ASTM STP 1023, L.F.P, Van Swam and C. M. Eucken, Eds.; American Society for Testing and Materials, Philadelphia, 1989, pp. 113-127.
(3) McInteer, W. A., Baty, D. L. and Stein, K. O., "The Influence of Tin Content on the Thermal Creep of Zircaloy-4", Zirconium in the Nuclear Industry. Eighth International Symposium, ASTM STP 1023, L.F.P. Van Swam and C. M. Eucken, Eds.; American Society for Testing and Materials, Philadelphia, 1989, pp. 621-640.
(4) Scott, D. B., "Notes on the Corrosion Behavior of Zircaloy-2 with Various Levels of Iron Content," Zirconium Highlights, WAPD-ZH-24, p. 11, (1960).
(5) Garzarolli, F., Schumann, R., and Steinberg, E., "Corrosion Optimized Zircaloy for BWR Fuel Elements", Paper Presented at the Tenth International Symposium on Zirconium in the Nuclear Industry, to be published in ASTM STP 1245, A. M. Garde and E. R. Bradley, Editors, 1994.

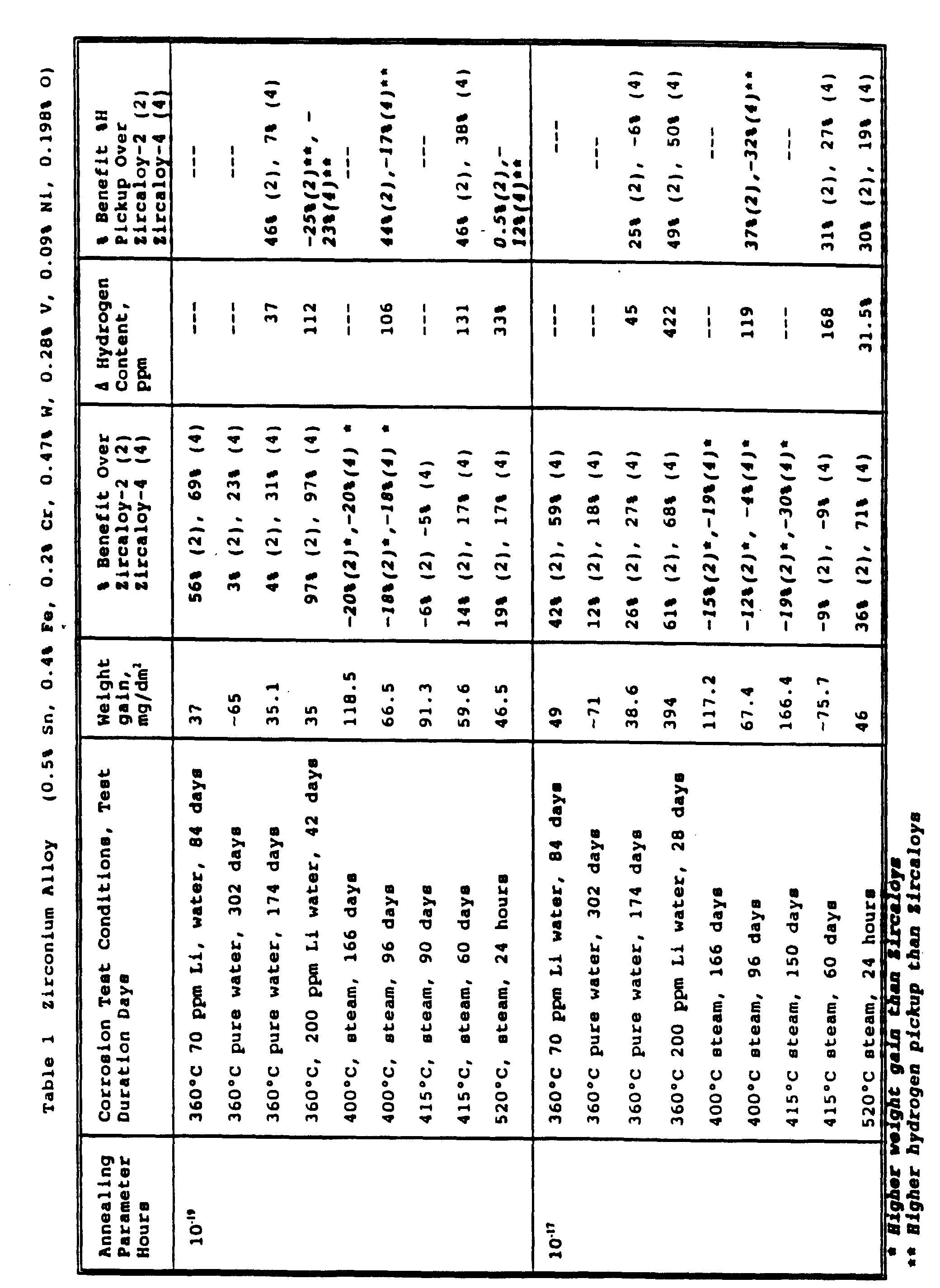

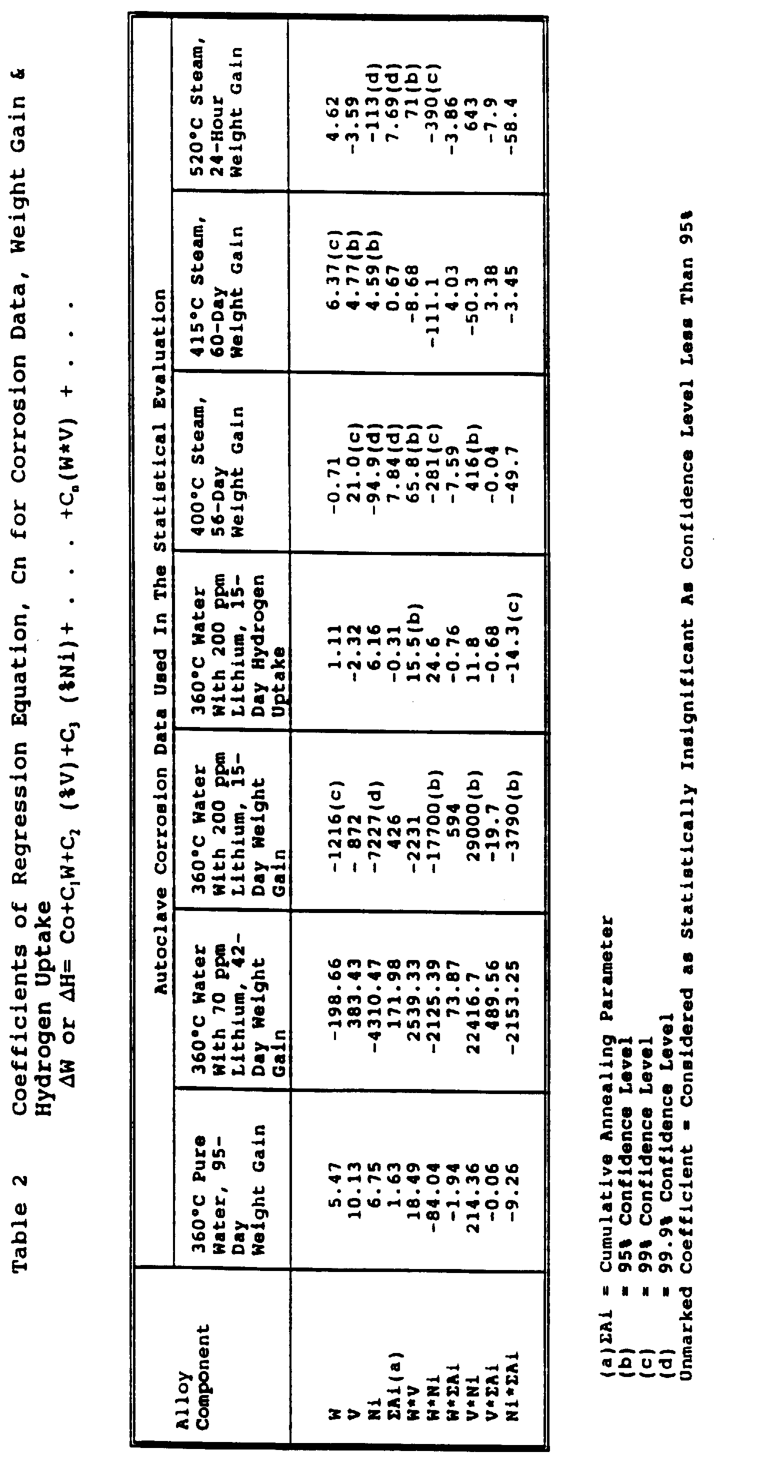

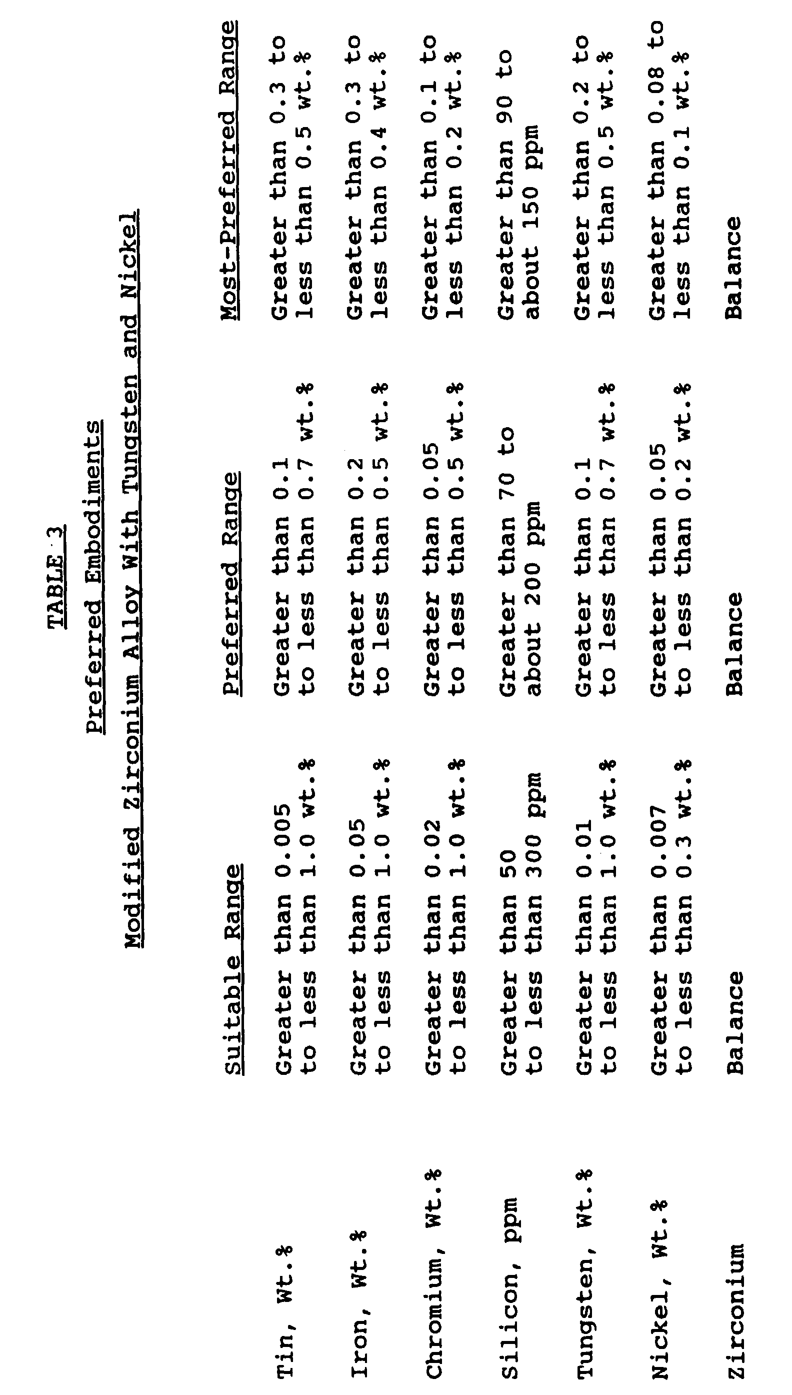

## Claims

1. A zirconium alloy for use in light water nuclear core structure elements and fuel cladding, consisting of: tin (Sn) in a range of greater than 0.005 to less than 1.0 wt.%; iron (Fe) in a range of greater than 0.05 to less than 1.0 wt.%; chromium (Cr) in a range of greater than 0.02 to less than 1.0 wt.%; silicon in a range of greater than 50 ppm to less than 300 parts per million (ppm); tungsten (W) in a range of greater than 0.01 to less than 1.0 wt.%; nickel (Ni) in a range of greater than 0.007 and less than 0.3 wt.%; and the balance being zirconium and impurities.

2. The alloy composition as set forth in claim 1 wherein said tin is in a range with a lower limit of greater than 0.1 and an upper limit of less than 0.7 wt.%.

3. The alloy composition as set forth in claim 1 wherein said tin is in a range with a lower limit of greater than 0.3 wt.% and an upper limit of less than 0.5 wt.%.

4. The alloy composition as set forth in claim 1 wherein said iron is in a range with a lower limit of greater than 0.2 wt.% and an upper limit of less than 0.5 wt.%.

5. The alloy composition as set forth in claim 1 wherein said iron is in a range with a lower limit of greater than 0.3 wt.% and an upper limit of less 0.4 wt.%.

6. The alloy composition as set forth in claim 1 wherein said chromium is in a range with a lower limit of greater than 0.05 wt.% and an upper limit of less than 0.5 wt.%.

7. The alloy composition as set forth in claim 1 wherein said chromium is in a range with a lower limit of greater than 0.1 wt.% and an upper limit of less than 0.2 wt.%.

8. The alloy composition as set forth in claim 1 wherein said silicon is in a range of greater than 70 to 200 ppm.

9. The alloy composition as set forth in claim 1 wherein said silicon is in a range of greater than 90 to 150 ppm.

10. The alloy composition as set forth in claim 1 wherein said tungsten is in a range with a lower limit of greater than 0.1 wt.% to an upper limit of less than 0.7 wt.%.

11. The alloy composition as set forth in claim 1 wherein said tungsten is in a range with a lower limit of greater than 0.2 wt.% to an upper limit of less than 0.5 wt.%.

12. The alloy composition as set forth in claim 1, wherein said nickel is in a range with a lower limit of greater than 0.05 wt.% to an upper limit of less than 0.2 wt.%.

13. The alloy composition as set forth in claim 1, wherein said nickel is in a range with a lower limit of greater than 0.08 wt.% to an upper limit of less than 0.1 wt.%.

## Patentansprüche

1. Zirkoniumlegierung zur Verwendung in Leicht-wasser-Reaktorkernbauelementen und -Brennstoffhülsen aus Zinn (Sn) in einem Bereich von über 0,005 bis unter 1,0 Gew.-%; Eisen (Fe) in einem Bereich von über 0,05 bis unter 1,0 Gew.-%; Chrom (Cr) in einem Bereich von über 0,02 bis unter 1,0 Gew.-%; Silicium in einem Bereich von über 50 ppm bis unter 300 ppm; Wolfram (W) in einem Bereich von über 0,01 bis unter 1,0 Gew.-% und Nickel in einem Bereich von über 0,007 bis unter 0,3 Gew.-%, wobei der Rest aus Zirkonium und Verunreinigungen besteht.

2. Legierungszusammensetzung nach Anspruch 1, wobei das Zinn in einem Bereich mit einer Untergrenze von über 0,1 und einer Obergrenze von unter 0,7 Gew.-% vorliegt.

3. Legierungszusammensetzung nach Anspruch 1, wobei das Zinn in einem Bereich mit einer Untergrenze von über 0,3 Gew.-% und einer Obergrenze von unter 0,5 Gew.-% vorliegt.

4. Legierungszusammensetzung nach Anspruch 1, wobei das Eisen in einem Bereich mit einer Untergrenze von über 0,2 Gew.-% und einer Obergrenze von unter 0,5 Gew.-% vorliegt.

5. Legierungszusammensetzung nach Anspruch 1, wobei das Eisen in einem Bereich mit einer Untergrenze von über 0,3 Gew.-% und einer Obergrenze von unter 0,4 Gew.-% vorliegt.

6. Legierungszusammensetzung nach Anspruch 1, wobei das Chrom in einem Bereich mit einer Untergrenze von über 0,05 Gew.-% und einer Obergrenze von unter 0,5 Gew.-% vorliegt.

7. Legierungszusammensetzung nach Anspruch 1, wobei das Chrom in einem Bereich mit einer Untergrenze von über 0,1 Gew.-% und einer Obergrenze von unter 0,2 Gew.-% vorliegt.

8. Legierungszusammensetzung nach Anspruch 1, wobei das Silicium in einem Bereich von über 70 ppm bis 200 pm vorliegt.

9. Legierungszusammensetzung nach Anspruch 1, wobei das Silicium in einem Bereich von über 90 ppm bis 150 pm vorliegt.

10. Legierungszusammensetzung nach Anspruch 1, wobei das Wolfram in einem Bereich mit einer Untergrenze von über 0,1 Gew.-% und einer Obergrenze von unter 0,7 Gew.-% vorliegt.

11. Legierungszusammensetzung nach Anspruch 1, wobei das Wolfram in einem Bereich mit einer Untergrenze von über 0,2 Gew.-% und einer Obergrenze von unter 0,5 Gew.-% vorliegt.

12. Legierungszusammensetzung nach Anspruch 1, wobei das Nickel in einem Bereich mit einer Untergrenze von über 0,05 Gew.-% und einer Obergrenze von unter 0,2 Gew.-% vorliegt.

13. Legierungszusammensetzung nach Anspruch 1, wobei das Nickel in einem Bereich mit einer Untergrenze von über 0,08 Gew.-% und einer Obergrenze von unter 0,1 Gew.-% vorliegt.

## Revendications

1. Alliage du zirconium destiné à être utilisé dans des éléments structuraux et des gaines de combustible de coeurs nucléaires à eau légère, constitué: d'étain (Sn) dans une gamme allant de plus de 0,005 à moins de 1,0% en poids; de fer (Fe) dans une gamme allant de plus de 0,05 à moins de 1,0% en poids; de chrome (Cr) dans une gamme allant de plus de 0,02 à moins de 1,0% en poids; de silicium dans une gamme allant de plus de 50 ppm à moins de 300 parties par million (ppm); de tungstène (W) dans une gamme allant de plus de 0,01 à moins de 1,0% en poids; de nickel (Ni) dans une gamme allant de plus de 0,007 à moins de 0,3% en poids; et le reste étant constitué de zirconium et d'impuretés.

2. Composition d'alliage selon la revendication 1, dans laquelle ledit étain est dans une gamme ayant une limite inférieure de plus de 0,1 et une limite supérieure de moins de 0,7% en poids.

3. Composition d'alliage selon la revendication 1, dans laquelle ledit étain est dans une gamme ayant une limite inférieure de plus de 0,3% en poids et une limite supérieure de moins de 0,5% en poids.

4. Composition d'alliage selon la revendication 1, dans laquelle ledit fer est dans une gamme ayant une limite inférieure de plus de 0,2% en poids et une limite supérieure de moins de 0,5% en poids.

5. Composition d'alliage selon la revendication 1, dans laquelle ledit fer est dans une gamme ayant une limite inférieure de plus de 0,3% en poids et une limite supérieure de moins de 0,4% en poids.

6. Composition d'alliage selon la revendication 1, dans laquelle ledit chrome est dans une gamme ayant une limite inférieure de plus de 0,05% en poids et une limite supérieure de moins de 0,5% en poids.

7. Composition d'alliage selon la revendication 1, dans laquelle ledit chrome est dans une gamme ayant une limite inférieure de plus de 0,1% en poids et une limite supérieure de moins de 0,2% en poids.

8. Composition d'alliage selon la revendication 1, dans laquelle ledit silicium est dans une gamme allant de plus de 70 à 200 ppm.

9. Composition d'alliage selon la revendication 1, dans laquelle ledit silicium est dans une gamme allant de plus de 9 à 150 ppm.

10. Composition d'alliage selon la revendication 1, dans laquelle ledit tungstène est dans une gamme ayant une limite inférieure de plus de 0,1% en poids et une limite supérieure de moins de 0,7% en poids.

11. Composition d'alliage selon la revendication 1, dans laquelle ledit tungstène est dans une gamme ayant une limite inférieure de plus de 0,2% en poids et une limite supérieure de moins de 0,5% en poids.

12. Composition d'alliage selon la revendication 1, dans laquelle ledit nickel est dans une gamme ayant une limite inférieure de plus de 0,05% en poids et une limite supérieure de moins de 0,2% en poids.

13. Composition d'alliage selon la revendication 1, dans laquelle ledit nickel est dans une gamme ayant une limite inférieure de plus de 0,08% en poids et une limite supérieure de moins de 0,1% en poids.
